# EUROPÄISCHE PATENTANMELDUNG

(11) **EP 1 263 013 A1**
(43) Veröffentlichungstag der Anmeldung: **04.12.2002**
(21) Anmeldenummer: 01810535.3
(22) Anmeldetag: 01.06.2001
(51) Int. Cl.: H01H 85/42, H01H 85/042, H01H 85/055

(54) **Sicherung**

(71) Anmelder: ABB RESEARCH LTD., 8050 Zürich (CH)
(72) Erfinder: Kaltenborn, Uwe, 5405 Baden-Dättwil (CH); Niemeyer, Lutz, 5242 Birr (CH)
(74) Vertreter: ABB Patent Attorneys

(57) **Zusammenfassung**

In einer Sicherungskammer (8) ist als Löschgasquelle ein Abbrandelement (11) angeordnet, das einen Lichtbogenraum (10) konzentrisch umgibt und von ihm durch ein Sicherungselement (9) getrennt ist, das aus Metall-, vorzugsweise Silberfolie besteht und an dessen Aussenseite das Abbrandelement (11) anschliesst. Letzteres besteht aus einem in Form eines mittig umlaufenden Rings angeordneten Zündmaterial (12) und einem gaserzeugenden Material (13). Beide Materialien bestehen z. B. aus Guanidin oder Guanidinderivaten als Brennstoff und einem Oxidator, dessen Anteil im Zündmaterial (12) überstöchiometrisch ist. Der Lichtbogenraum (10) wird an entgegengesetzten Enden von Düsen (7a,b) begrenzt, die ihn mit Auspuffvolumina (4a,b) verbinden. Bei einem Überstrom erwärmt sich das Sicherungselement (9) auf die Zündtemperatur des Zündmaterials (12) und wird mittig aufgerissen. Der sich bildende Lichtbogen wird vom Löschgas, das sich beim Abbrand des Abbrandelements (11) bildet, axial beblasen und gelöscht. Das Sicherungselement (9) kann mittig eine Auslösezone aufweisen, wo es leichter unterbrechbar, insbesondere schmelzbar ist. Die Löschgasquelle kann auch Druckgastanks oder Kaltgasgeneratoren umfassen.

## Beschreibung

### Technisches Gebiet

Die Erfindung betrifft eine Sicherung, wie sie in Mittelund Hochspannungsanlagen zum Einsatz kommen.

### Stand der Technik

Gattungsgemässe Sicherungen sind z. B. aus US-A-4 319 212 und US-A-4 638 283 bekannt. Dort ist jeweils ein bandförmiges, die an den gegenüberliegenden Enden einer zylindrischen Sicherungskammer angeordneten elektrischen Anschlüsse verbindendes Sicherungselement - es können auch mehrere parallel geführte sein - schraubenlinienförmig auf einen aus elektrisch isolierendem Material bestehenden mit Rippen versehenen Träger gewickelt. An Stellen, an denen ein Sicherungselement auf einer der Rippen aufliegt, ist in einer Vertiefung derselben ein Abbrandelement angeordnet, das unter Löschgasentwicklung abbrennt, sobald sich ein Lichtbogen bildet bzw. das Abbrandelement durch ein elektrisches Signal gezündet wird.

Derartige Sicherungen sind zwar geeignet, verhältnismässig hohe Spannungen aufzubauen, doch ist, da die Beblasung der sich bildenden Lichtbögen nur gering und wenig wirksam ist, eine rasche und zuverlässige Unterbrechung von hohen Strömen nicht möglich.

### Darstellung der Erfindung

Der Erfindung liegt die Aufgabe zu Grunde, eine Sicherung anzugeben, das die rasche und sichere Unterbrechung von Kurzschlussströmen hoher Leistung gestattet. Diese Aufgabe wird durch die Merkmale im kennzeichnenden Teil des Anspruchs 1 gelöst. Durch die Erfindung wird eine Sicherung geschaffen, bei welcher nicht nur ein Sicherungselement unterbrochen, sondern auch der dabei entstehende Lichtbogen so wirksam beblasen wird, dass er schnell erlischt.

Die erfindungsgemässe Sicherung kann daher auch in Hochspannungsanlagen mit Nennspannungen von 72 kV und mehr bei Nennströmen von mehr als 2 kA eingesetzt werden. Ihr Kurzschluss-Abschaltvermögen liegt in der gleichen Grössenordnung wie das von Hochspannungsschaltern. Sie kann daher auch in Schaltanlagen als Ausfallsicherung in Reihe mit einem Schaltgerät eingesetzt werden.

### Kurze Beschreibung der Zeichnungen

Im folgenden wird die Erfindung anhand von Figuren, welche lediglich Ausführungsbeispiele darstellen, näher erläutert.
Es zeigen
- Fig. 1: einen teilweisen axialen Längsschnitt durch eine erfindungsgemässe Sicherung gemäss einer ersten Ausführungsform,
- Fig. 2: einen Ausschnitt aus einem axialen Längsschnitt entsprechend Fig. 1 durch eine erfindungsgemässe Sicherung gemäss einer zweiten Ausführungsform,
- Fig. 3a: einen Ausschnitt entsprechend Fig. 2 aus einem axialen Längsschnitt durch eine erfindungsgemässe Sicherung gemäss einer dritten Ausführungsform,
- Fig. 3b: vergrössert einen Schnitt durch ein Bestandteil der Sicherung gemäss der dritten Ausführungsform,
- Fig. 4a: einen teilweisen axialen Längsschnitt durch eine erfindungsgemässe Sicherung gemäss einer vierten Ausführungsform und
- Fig. 4b: einen Querschnitt durch die Sicherung gemäss der vierten Ausführungsform längs der Ebene B-B in Fig. 4a.

### Wege zur Ausführung der Erfindung

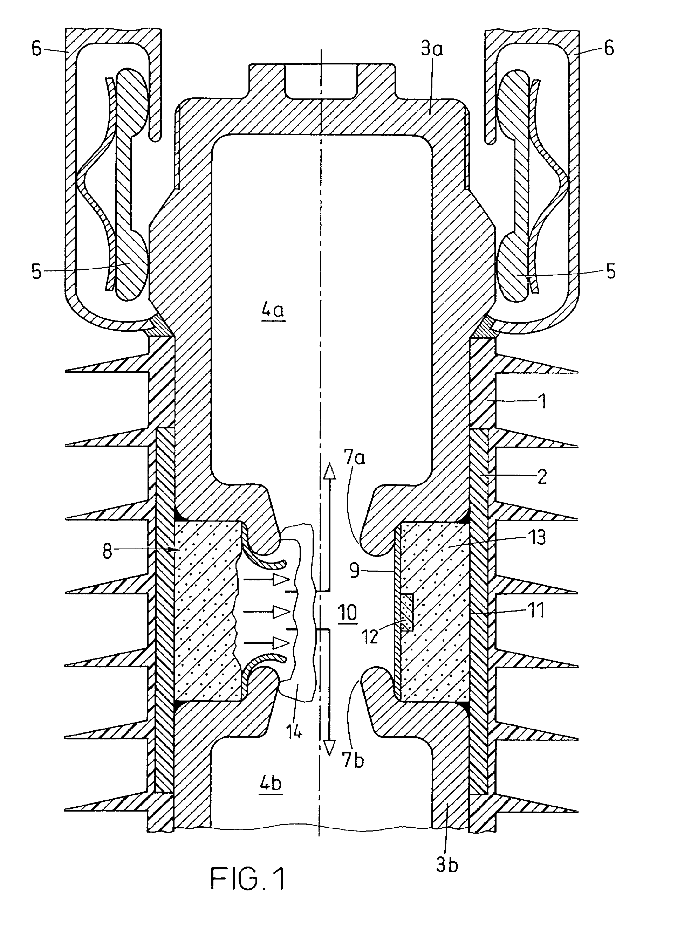

In ihrem grundsätzlichen Aufbau weist die im wesentlichen um eine Mittelebene spiegelsymmetrische Sicherung ein zylindrisches Gehäuse 1 (Fig. 1 auf, das z. B. aus Kunststoff besteht, mit einem mittigen Verstärkungsring 2 aus faserverstärktem Kunststoff. Zwei Gefässe 3a,b aus elektrisch leitendem Material, die Auspuffvolumina 4a,b, welche evakuiert oder teilevakuiert sein können, umgeben und deren Endabschnitte aus dem Gehäuse 1 herausragen und über Kontaktfinger 5 mit einer anschliessenden Leitung 6 in elektrisch leitendem Kontakt stehen, liegen einander mit Abstand gegenüber. Sie bilden einander zugewandte Düsen 7a,b, welche die Auspuffvolumina 4a,b jeweils mit einer zwischen ihnen liegenden Sicherungskammer 8 verbinden, die aussen vom Verstärkungsring 2 begrenzt wird. Ein in der Sicherungskammer 8 angeordnetes zylindermantelförmig ausgebildetes Sicherungselement 9 aus Folie oder Blech, dessen Enden an den Aussenseiten der Düsen 7a,b anliegen, so dass sie dieselben elektrisch leitend verbinden, grenzt einen zentralen Lichtbogenraum 10 ab. An die Aussenseite des Sicherungselements 9 schliesst als Löschgasquelle ein Abbrandelement 11 an, welches den Lichtbogenraum 10 und das Sicherungselement 9 konzentrisch umgibt und den zwischen dem letzteren und dem Verstärkungsring 2 liegenden Teil der Sicherungskammer 8 ausfüllt. Es besteht aus Zündmaterial 12, das einen mittig umlaufenden, am Sicherungselement 9 anliegenden Ring bildet und im übrigen aus einem gaserzeugenden Material 13.

Das Sicherungselement 9 ist als Schmelzleiter ausgebildet und besteht ganz oder überwiegend aus einem schmelzbaren elektrisch leitfähigen Material, vorzugsweise einem Metall oder einer Legierung mit hoher Leitfähigkeit und verhältnismässig tiefem Schmelzpunkt, z. B. Silber. Das Zündmaterial 12 und das gaserzeugende Material 13 bestehen z. B. jeweils im wesentlichen aus einem Brennstoff, der vorzugsweise überwiegend organische Stickstoffverbindungen, insbesondere Guanidin oder Guanidinderivate enthält, fakultativ auch einen Zusatzstoff wie Mg, Al, Zr, Hf oder Th sowie einem Oxidator, der vorzugsweise im wesentlichen aus Nitraten, Chloraten, Perchloraten oder Permanganaten besteht.

Beim Zündmaterial 12 ist der Anteil des Oxidators stöchiometrisch oder überstöchiometrisch. Es kann auch Natriumazetat enthalten und eine Phase, welche eine thermitische Reaktion ausführt. Wesentlich ist, dass es bei einer gut einstellbaren Temperatur zündet und unter Hitzeund Gasentwicklung das Sicherungselement 9 aufreisst und das gaserzeugende Material 13 zündet. Bei letzterem ist der Anteil des Oxidators vorzugsweise unterstöchiometrisch oder höchstens stöchiometrisch, jedenfalls so, dass es nicht spontan zündet, sondern sein Abbrand erst durch die Zündung des Zündmaterials 12 ausgelöst wird. Das gaserzeugende Material 13 kann ein Pulver oder auch ein Pressling oder Sinterkörper sein. Es setzt beim Abbrand eine grosse Menge Löschgas, vor allem Stickstoff oder CO₂ frei.

Bei Auftreten eines Überstroms erwärmt sich das Sicherungselement 9, bis es die Zündtemperatur des Zündmaterials 12 erreicht und dessen Zündung auslöst. Der Abbrand des Zündmaterials bewirkt eine starke Hitze- und Gasentwicklung, was zu einem mittigen Aufreissen des durch die Erwärmung bereits aufgeweichten Sicherungselements 9 und zur Bildung eines Lichtbogens 14 im Lichtbogenraum 10 führt sowie zur Zündung des gaserzeugenden Materials 13, das dann unter vermehrter Gasfreisetzung abbrennt. Durch die rasche Freisetzung einer grossen Gasmenge wird in der Sicherungskammer 8 ein hoher Druck aufgebaut, welcher eine starke Gasströmung durch die Düsen 7a,b in die Auspuffvolumina 4a,b erzeugt. Dadurch werden die Teile des Sicherungselements 9 beidseits gegen die Düsen 7a,b zurückgebogen und der Lichtbogen 14 wird intensiv axial beblasen, wobei seine Fusspunkte beidseits auf das noch kalte Material der Düsen 7a,b getrieben werden. Die starke Beblasung führt zur Löschung des Lichtbogens 14 beim nächsten Nulldurchgang.

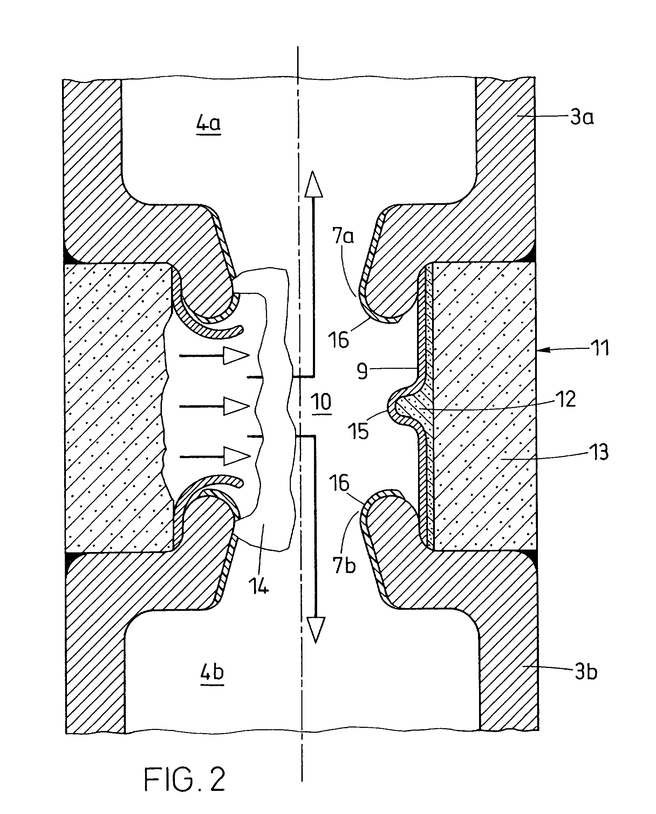

Gemäss einer zweiten Ausführungsform (Fig. 2) weist das Sicherungselement 9, das im übrigen demjenigen der ersten Ausführungsform entspricht, eine mittige, radial nach innen vorstehende umlaufende Einbuchtung 15 auf. Das Zündmaterial 12 schliesst an die gesamte Aussenfläche des Sicherungselements 9 an und bildet somit eine durchgehende Schicht, welche die ganze Innenseite des gaserzeugenden Materials 13 bedeckt. Die Einbuchtung 15 bildet eine Auslösezone, an welcher das Sicherungselement 9 thermisch und mechanisch schwächer und damit leichter unterbrechbar, insbesondere leichter aufschmelzbar ist als im verbleibenden Bereich. Die Düsen 7a,b sind mit einer Polymerschicht 16, z. B. aus einem Polytetrafluorethylen, Polyolefin oder Polyethylen bedeckt.

Ein Überstrom führt vor allem zu einer Erwärmung der Auslösezone, so dass dort zuerst die Zündtemperatur des Zündmaterials 12 erreicht und damit die Zündung ausgelöst und das Sicherungselement 9 aufgerissen wird. Die Verteilung des Zündmaterials 12 führt zu einer raschen Zündung auch des gaserzeugenden Materials 13 auf breiter Front. Die Verschiebung der Lichtbogenfusspunkte auf die Düsen 7a,b bald nach der Bildung des Lichtbogens 14 bewirkt einen mindestens teilweisen Abbrand der Polymerschicht 16, was die Lichtbogenlöschung unterstützt.

Eine leichter schmelzbare Auslösezone kann auch durch andere Massnahmen hergestellt oder durch sie unterstützt werden. So kann z. B. eine Zone der dem Lichtbogenraum 10 zugewandten Oberfläche des Sicherungselements 9 mit einer wärmedämmenden Schicht bedeckt sein, beispielsweise einem Acryllack. Oder der Schmelzpunkt des Materials des Sicherungselements 9 kann dort herabgesetzt sein, z. B. kann es in der Auslösezone ganz oder teilweise aus einer Ag₂In/AgIn₂-Legierung bestehen, deren Schmelzpunkt zwischen 230°C und 260°C liegt, während es im verbleibenden Bereich etwa aus reinem (99,99%) Silber mit einem Schmelzpunkt von 962°C besteht.

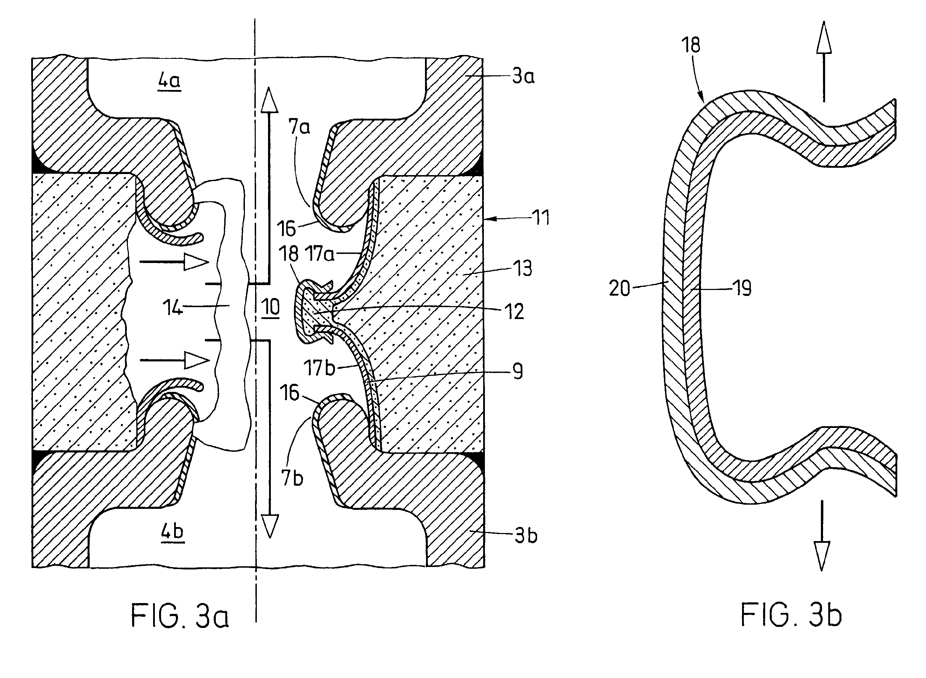

Gemäss einer dritten Ausführungsform (Fig. 3a,b) ist das Sicherungselement 9 dreiteilig aufgebaut mit zwei spiegelsymmetrisch angeordneten Teilelementen 17a,b, deren Radius sich gegen die Mitte hin immer stärker verringert, so dass sie dort zwei radial nach innen vorstehend umlaufende Flansche bilden, die voneinander beabstandet sind. Sie sind durch eine ringförmig umlaufende Klammer 18 mit etwa U-förmigem Querschnitt verbunden, welche die beiden Flansche aufnimmt und zusammenhält. Der Bereich zwischen den Flanschen und der Klammer 18, der wiederum eine Auslösezone bildet, an der das Sicherungselement 9 leichter unterbrechbar ist, ist mit Zündmaterial 12 gefüllt, das in dünneren Schichten die Aussenseiten der Teilelemente 17a,b ganz bedeckt und an welches aussen wiederum das gaserzeugende Material 13 anschliesst. Die Klammer 18 setzt sich (Fig. 3b) aus einer inneren Leitschicht 19, welche aus einem hochleitfähigen Material wie Silber oder Kupfer besteht und einer äusseren Formschicht 20, welche aus einer Formgedächtnislegierung besteht, zusammen.

Bei Auftreten eines Überstroms erwärmt sich wiederum das Sicherungselement 9 und die Klammer 18 erreicht eine Temperatur, wo sie sich unter dem Einfluss der Gedächtnislegierung öffnet. Etwa bei der gleichen Temperatur zündet auch das Zündmaterial 12. Das Sicherungselement 9 kann dann sehr leicht aufgerissen werden, da der mechanische Zusammenhalt bereits durch die Wirkung der Gedächtnislegierung geschwächt ist. Eine Vorspannung der Teilelemente 17a,b gegen die Düsen 7a,b hin kann den Vorgang unterstützen.

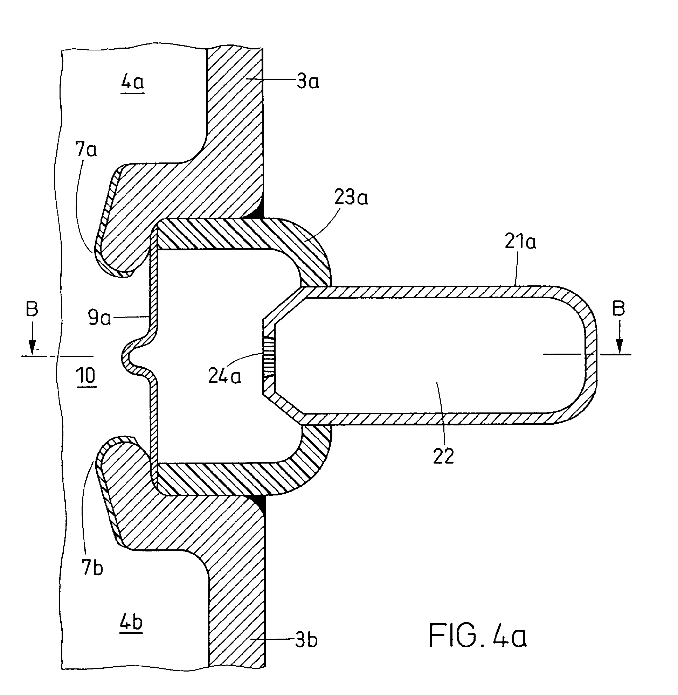

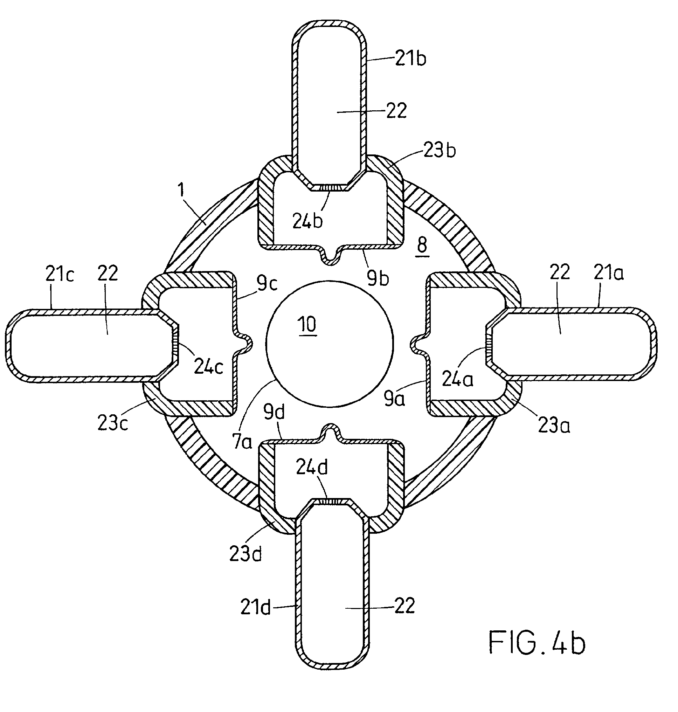

Bei einer vierten Ausführungsform (Fig. 4a,b) werden als Löschgasquelle vier gleichmässig um die Sicherungskammer 8 gruppierte Teilquellen eingesetzt, welche im Beispiel als ungefähr zylindrische Druckgastanks 21a-d ausgebildet sind, welche mit einem unter hohem Druck stehenden Löschgas 22, z. B. N₂ gefüllt sind. Jeder der Druckgastanks 21a-d ist in eine Öffnung in der Aussenwand eines von vier schüsselförmigen Halterungen 23a-d aus isolierendem Material eingesetzt, welches seinerseits in einer Öffnung des Gehäuses 1 sitzt und mit den beiden Auspuffvolumina 4a,b in Kontakt ist. Die Halterung 23a bildet einen Hohlraum, in den an der Aussenseite über ein Ventil 24a der Druckgastank 21a mündet und der an der Innenseite gegenüber dem Lichtbogenraum 10 durch ein Sicherungselement 9a verschlossen ist, welches eine in denselben vorspringende mittige Ausbuchtung aufweist. Die übrigen Druckgastanks 21b-d sind auf völlig entsprechende Weise ausgebildet und angebracht.

Bei Auftreten eines Überstroms erwärmen sich die vier parallelen Sicherungselemente 9a-d und erweichen dadurch. Zugleich werden durch äussere Auslösung, die z. B. von einem Strom- oder Spannungsmessgerät gesteuert sein kann, die Ventile 24a-d geöffnet und dadurch ein Druckgasstrom aus den Druckgastanks 21a-d durch die Halterungen 23a-d in den Lichtbogenraum 10 und weiter durch die Düsen 7a,b in die Auspuffvolumina 4a,b geleitet, wobei die Teilelemente 9a-d aufgetrennt werden und der sich bildende Lichtbogen gelöscht wird.

Statt der Druckgastanks können auch Kaltgasgeneratoren eingesetzt werden, welche weitgehend gleich ausgebildet, aber mit Brennstoff gefüllt sind, während statt Ventilen externe Kühler, z. B. Gitter oder Umlenksysteme vorgesehen sind. Der Brennstoff kann im wesentlichen aus organischen Stickstoffverbindungen wie Guanidinen oder auch Acetaten sowie fakultativ einem internen Kühler, der vorzugsweise mindestens ein Metalloxid, insbesondere Eisenoxid oder BaO, MnO₂, Co₂O₃ + C oder auch LiF, KCl, C enthält, bestehen. Es kommen aber auch andere Brennstoffzusammensetzungen in Frage, wie sie etwa bei sogenannten air bags im Automobilbau eingesetzt werden, z. B. 21NaN₃ + KNO₃ + 4Fe₂O₃ + 2,5SiO₂, bei dessen Abrand vor allem N₂ entsteht. Der Kaltgasgenerator kann aber auch wie in der RU-A-2 108 282 beschrieben aufgebaut sein.

Die Auslösung erfolgt wiederum von aussen durch einen elektrischen Zündimpuls. Beim Durchströmen der externen Kühler wird das beim Abbrand des Brennstoffs erzeugte Gas stark abgekühlt, so dass es im Lichtbogenraum eine sehr starke Kühlwirkung entfaltet.

Es sind zahlreiche Abwandlungen der beschriebenen Ausführungsformen möglich, ohne dass der Erfindungsgedanke verlassen würde. So kann die Sicherungskammer auch eine einzige Düse und nur ein Auspuffvolumen aufweisen. Die Sicherung braucht auch nicht rotationssymmetrisch zu sein. Wesentlich ist dabei, dass der sich beim Durchschmelzen des Sicherungselements bildende Lichtbogen im Bereich der Gasströmung liegt, die von der Löschgasquelle ausgehend die Düse oder Düsen durchdringt. Gegebenenfalls kann das Abbrandelement z. B. im Hinblick auf eine Steuerung des zeitlichen Verlaufs des Druckaufbaus verschiedene Formen aufweisen und auch von Hohlräumen unterbrochen oder - vor allem wenn Auslösung von aussen vorgesehen ist - auch mehrteilig sein.

### Bezugszeichenliste

- 1: Gehäuse
- 2: Verstärkungsring
- 3a,b: Gefässe
- 4a,b: Auspuffvolumina
- 5: Kontaktfinger
- 6: Leiter
- 7a,b: Düsen
- 8: Sicherungskammer
- 9: Sicherungselement
- 10: Lichtbogenraum
- 11: Abbrandelement
- 12: Zündmaterial
- 13: gaserzeugendes Material
- 14: Lichtbogen
- 15: Einbuchtung
- 16: Polymerschicht
- 17a,b: Teilelemente
- 18: Klammer
- 19: Leitschicht
- 20: Formschicht
- 21a-d: Druckgastanks
- 22: Löschgas
- 23a-d: Halterungen
- 24a-d: Ventile

## Patentansprüche

1. Sicherung mit einer Sicherungskammer (8) und an entgegengesetzten Enden derselben einem ersten elektrischen Anschluss und einem zweiten elektrischen Anschluss sowie mit mindestens einem durch die Sicherungskammer (8) hindurch den ersten elektrischen Anschluss mit dem zweiten elektrischen Anschluss verbindenden Sicherungselement (9) aus elektrisch leitendem schmelzbaren Material sowie mit einer auslösbaren Löschgasquelle zur Erzeugung einer Löschgasströmung in der Sicherungskammer (8), **dadurch gekennzeichnet, dass** die Sicherungskammer (8) an mindestens einem Ende eine Düse (7a, 7b) aufweist, welche dieselbe mit einem Auspuffvolumen (4a, 4b) verbindet und das mindestens eine Sicherungselement (9) im wesentlichen zwischen der Löschgasquelle und der Düse (4a, 4b) angeordnet ist.

2. Sicherung nach Anspruch 1, **dadurch gekennzeichnet, dass** das mindestens eine Sicherungselement (9) zwischen der Löschgasquelle und einem Lichtbogenraum (10) angeordnet ist, welcher von der mindestens einen Düse (4a, 4b) begrenzt wird.

3. Sicherung nach Anspruch 2, **dadurch gekennzeichnet, dass** die Löschgasquelle mehrere Teilquellen umfasst, die um das Sicherungselement (9) herum angeordnet sind.

4. Sicherung nach einem der Ansprüche 1 bis 3, **dadurch gekennzeichnet, dass** die Löschgasquelle mindestens ein zündbares Abbrandelement (11) umfasst.

5. Sicherung nach Anspruch 4, **dadurch gekennzeichnet, dass** das mindestens eine Abbrandelement (11) in der Sicherungskammer angeordnet ist und das mindestens eine Sicherungselement (9) umgibt.

6. Sicherung nach Anspruch 5, **dadurch gekennzeichnet, dass** das mindestens eine Sicherungselement (9) und das mindestens eine Abbrandelement (11) den Lichtbogenraum (10) konzentrisch umgeben.

7. Sicherung nach einem der Ansprüche 1 bis 6, **dadurch gekennzeichnet, dass** mindestens die Oberfläche der mindestens einen Düse (4a, 4b) im wesentlichen aus elektrisch leitendem Material besteht und mit einem der elektrischen Anschlüsse elektrisch leitend verbunden ist.

8. Sicherung nach einem der Ansprüche 1 bis 7, **dadurch gekennzeichnet, dass** sie zwei an einander gegenüberliegenden Enden der Sicherungskammer (8) angeordnete Düsen (4a, 4b) aufweist.

9. Sicherung nach einem der Ansprüche 1 bis 8, **dadurch gekennzeichnet, dass** das mindestens eine Sicherungselement (9) als Folie oder Blech ausgebildet ist und die Löschgasquelle vom Lichtbogenraum (10) trennt.

10. Sicherung nach einem der Ansprüche 1 bis 9, **dadurch gekennzeichnet, dass** das mindestens eine Sicherungselement (9) eine Auslösezone aufweist, in welcher es leichter unterbrechbar ist als im übrigen Bereich.

11. Sicherung nach Anspruch 10, **dadurch gekennzeichnet, dass** das mindestens eine Sicherungselement (9) in der Auslösezone leichter schmelzbar ist.

12. Sicherung nach Anspruch 6 und Anspruch 10 oder 11, **dadurch gekennzeichnet, dass** die Auslösezone von einer radial nach innen vorstehenden Einbuchtung (15) gebildet wird.

13. Sicherung nach Anspruch 11 oder 12, **dadurch gekennzeichnet, dass** das Material des mindestens einen Sicherungselements (9) im Bereich der Auslösezone einen tieferen Schmelzpunkt aufweist.

14. Sicherung nach Anspruch 10, **dadurch gekennzeichnet, dass** die Auslösezone eine Klammer (18) umfasst, welche zwei Teilelemente (17a, 17b) des mindestens einen Sicherungselements (9) verbindet und welche mindestens zum Teil aus einer Formgedächtnislegierung besteht, derart, dass sie sich bei Erreichen einer bestimmten Temperatur öffnet.

15. Sicherung nach einem der Ansprüche 4 bis 14, **dadurch gekennzeichnet, dass** das Abbrandelement (11) am mindestens einen Sicherungselement (9) anliegt.

16. Sicherung nach einem der Ansprüche 4 bis 15, **dadurch gekennzeichnet, dass** das Abbrandelement (11) aus mindestens zwei verschiedenen Materialien besteht, einem Zündmaterial (12) und einem gaserzeugenden Material (13).

17. Sicherung nach Anspruch 15 und 16, **dadurch gekennzeichnet, dass** der am mindestens einen Sicherungselement (9) anliegende Teil des Abbrandelements (11) mindestens teilweise, vorzugsweise ganz aus Zündmaterial (12) besteht.

18. Sicherung nach Anspruch 16 oder 17, **dadurch gekennzeichnet, dass** das Zündmaterial (12) im wesentlichen aus einem Brennstoff, der vorzugsweise im wesentlichen organische Stickstoffverbindungen, insbesondere Guanidin oder Guanidinderivate enthält sowie einem Oxidator, der vorzugsweise im wesentlichen Nitrate, Chlorate, Perchlorate oder Permanganate enthält, zusammengesetzt ist, wobei der Anteil des Oxidators stöchiometrisch oder überstöchiometrisch ist.

19. Sicherung nach einem der Ansprüche 16 bis 18, **dadurch gekennzeichnet, dass** das gaserzeugende Material (13) aus einem Brennstoff, der vorzugsweise im wesentlichen organische Stickstoffverbindungen, insbesondere Guanidin oder Guanidinderivate und fakultativ auch einen Zusatzstoff wie Mg, Al, Zr, Hf oder Th enthält sowie einem Oxidator, der vorzugsweise im wesentlichen Nitrate, Chlorate, Perchlorate oder Permanganate enthält, zusammengesetzt ist, wobei der Anteil des Oxidators stöchiometrisch oder unterstöchiometrisch ist.

20. Sicherung nach einem der Ansprüche 1 bis 19, **dadurch gekennzeichnet, dass** die Löschgasquelle mindestens einen über ein Ventil (24a; 24b; 24c; 24d) mit der Sicherungskammer (8) verbundenen Druckgastank (21a, 21b, 21c, 21d) umfasst.

21. Sicherung nach einem der Ansprüche 1 bis 20, **dadurch gekennzeichnet, dass** die Löschgasquelle mindestens einen mit der Sicherungskammer verbundenen Kaltgasgenerator umfasst.

22. Sicherung nach Anspruch 21, **dadurch gekennzeichnet, dass** der mindestens eine Kaltgasgenerator einen Brennstoff, der vorzugsweise im wesentlichen organische Stickstoffverbindungen wie Guanidine oder auch Acetate enthält, umfasst sowie fakultativ einen internen Kühler, der vorzugsweise mindestens ein Metalloxid, insbesondere Eisenoxid oder BaO, MnO₂, Co₂O₃ + C oder auch LiF, KCl, C enthält.

23. Sicherung nach Anspruch 21 oder 22, **dadurch gekennzeichnet, dass** der mindestens eine Kaltgasgenerator einen der Sicherungskammer zugewandten externen Kühler, der vorzugsweise mindestens ein Gitter oder Umlenksystem enthält, umfasst.
